# DEMANDE DE BREVET EUROPEEN

(11) **EP 2 006 967 A1**
(43) Date de publication de la demande: **24.12.2008**
(21) Numéro de dépôt: 08290487.1
(22) Date de dépôt: 28.05.2008
(51) Int. Cl.: H02G 3/16

(54) **Appareillage électrique résistant aux chocs en face avant**

(30) Priorité: 20.06.2007 FR 0704407
(71) Demandeur: LEGRAND FRANCE, 87000 Limoges (FR); LEGRAND SNC, 87000 Limoges (FR)
(72) Inventeur: Hardoin, Grégory, 87220 Feytiat (FR)
(74) Mandataire: Orsini, Fabienne

(57) **Abrégé**

L'invention concerne un appareillage électrique (1) comprenant :
- un mécanisme d'appareillage (10) pourvu d'un socle (11), et
- un support d'appareillage (20) sur lequel est rapporté le mécanisme d'appareillage et qui présente une forme de cadre pourvu d'une ouverture centrale (21) qui loge ledit socle.

Selon l'invention, il est prévu, de part et d'autre de ladite ouverture centrale, au moins deux butées (41A) distinctes rapportées sur la face arrière (22) du support d'appareillage, à distance de celle-ci, et ledit socle présente une face externe latérale qui, en correspondance, porte en saillie au moins deux ailettes (12), chaque ailette comportant un bord libre arrière (13) adapté à venir en appui contre ladite butée correspondante.

## Description

La présente invention concerne de manière générale les appareillages électriques tels que les interrupteurs, les va-et-vient, les prises de courant ou encore les prises d'antenne et les disjoncteurs.

Elle concerne plus particulièrement un appareillage électrique comprenant un mécanisme d'appareillage pourvu d'un socle et un support d'appareillage sur lequel est rapporté le mécanisme d'appareillage et qui présente une forme de cadre pourvu d'une ouverture centrale logeant le socle du mécanisme d'appareillage.

### ARRIÈRE-PLAN TECHNOLOGIQUE

Dans les appareillages électriques connus du type précité, le socle du mécanisme d'appareillage est généralement encliqueté sur le support d'appareillage.

Pour être installés dans des locaux industriels, de tels appareillages électriques doivent résister aux chocs en face avant d'indice IK8 afin d'éviter que le mécanisme d'appareillage ne s'enfonce dans la boîte à l'intérieur de laquelle l'appareillage électrique est rapporté.

On connaît du document FR 2 856 202, appartenant aux demanderesses, un support d'appareillage pour un appareillage électrique résistant aux chocs d'indice IK8. Ce support d'appareillage porte sur sa face arrière un berceau de soutien en forme de U.

Lorsque le socle du mécanisme d'appareillage est monté dans l'ouverture centrale de ce support, la base du berceau de soutien s'étend derrière la face arrière du socle, parallèlement à celle-ci, au contact ou à proximité de celle-ci.

En cas de choc sur un tel appareillage électrique, le berceau de soutien, qui forme un appui pour le socle du mécanisme d'appareillage, évite la désolidarisation dudit socle dudit support.

L'inconvénient principal d'un tel support d'appareillage est que le berceau de soutien présente un encombrement important à l'arrière du support d'appareillage et prend de la place dans la boîte qui reçoit l'appareillage électrique, ce qui réduit le volume de câblage présent dans ladite boîte.

La présence du berceau de soutien dans la boîte rend alors difficile l'opération de câblage du mécanisme d'appareillage.

### OBJET DE L'INVENTION

Afin de remédier à l'inconvénient précité de l'état de la technique, la présente invention propose un appareillage électrique peu volumineux, qui libère l'espace présent derrière le mécanisme d'appareillage et qui résiste aux chocs d'indice IK8.

Plus particulièrement, on propose selon l'invention un appareillage électrique tel que défini dans la revendication 1.

Ainsi, grâce à l'invention, en cas de choc violent sur la face avant de l'appareillage électrique, l'appui des butées contre les ailettes rigidifie la liaison entre le socle du mécanisme d'appareillage et le support d'appareillage de sorte que cette liaison ne cède pas.

Les butées s'étendant de part et d'autre de l'ouverture centrale, leur disposition ne génère aucun encombrement à l'arrière du mécanisme d'appareillage, si bien que la taille globale de l'appareillage électrique est réduite. Le volume de câblage disponible dans la boîte qui reçoit l'appareillage électrique est ainsi important, ce qui facilite l'opération de câblage réalisée par l'installateur.

D'autres caractéristiques avantageuses et non limitatives de l'appareillage électrique conforme à l'invention sont énoncées dans les revendications 2 à 15.

Ainsi, avantageusement, dans l'appareillage électrique conforme à l'invention, le socle du mécanisme d'appareillage est monté sur le support d'appareillage de manière à rester immobile dans l'ouverture centrale, ce qui confère à l'appareillage électrique une rigidité satisfaisante.

Ce socle est monté avec un léger débattement en translation dans l'ouverture centrale du support d'appareillage.

Les butées et les ailettes sont conçues pour rester à distance les unes des autres au repos et pour venir au contact les unes des autres en cas de choc, lorsque les moyens élastiques sont écrasés.

De cette manière, l'énergie dégagée par un choc modéré en face avant de l'appareillage électrique est absorbée par les seuls moyens élastiques. Au contraire, l'énergie dégagée par un choc important est tout d'abord absorbée par ces moyens élastiques puis par les butées elles-mêmes.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective arrière d'un appareillage électrique selon l'invention ;
- la figure 2 est une vue de côté de l'appareillage électrique de la figure 1 ; et
- la figure 3 est une vue en perspective éclatée de l'appareillage électrique de la figure 1.

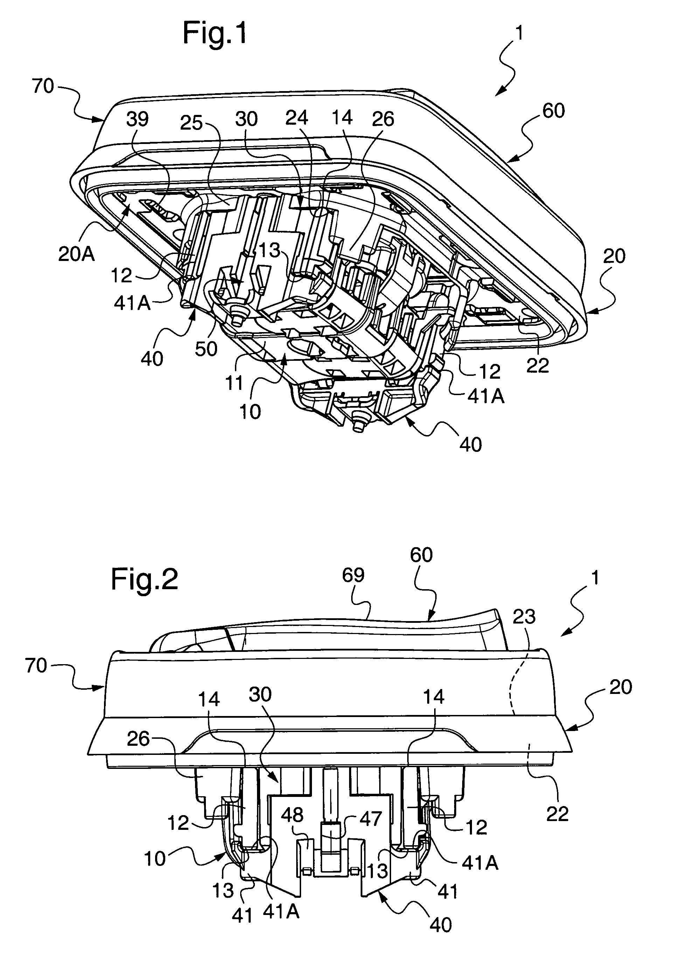

Sur les figures 1 et 2, on a représenté un appareillage électrique 1 assemblé, prêt à être monté dans une boîte à encastrer dans une paroi quelconque.

Plus particulièrement ici, l'appareillage électrique 1 est un appareillage étanche qui peut être exposé à l'eau sans crainte d'infiltration d'humidité dans la boîte de réception de l'appareillage électrique 1.

Ici, cet appareillage électrique 1 présente une fonction de prise de courant. En variante, cet appareillage électrique pourrait présenter une fonction différente, telle qu'une fonction d'interrupteur, de prise de téléphone, de va-et-vient ou encore de disjoncteur.

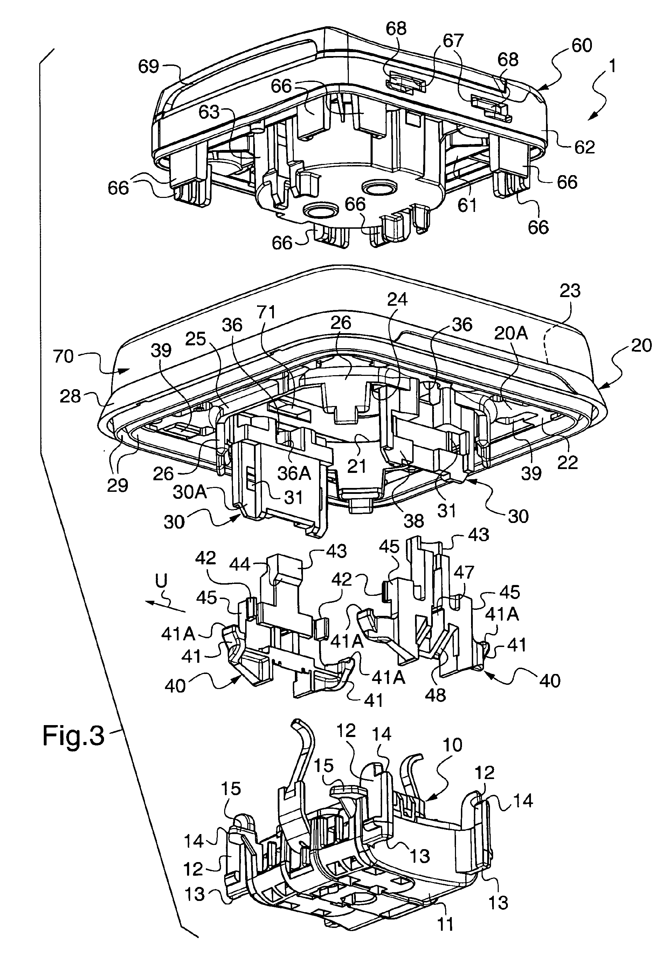

Comme le montre plus particulièrement la vue éclatée de la figure 3, cet appareillage électrique 1 comprend différents éléments distincts, dont un mécanisme d'appareillage 10, un support d'appareillage 20, une plaque de finition 70 et un enjoliveur 60.

Le mécanisme d'appareillage 10 comporte un socle 11 formant un boîtier parallélépipédique ouvert en face avant, présentant une paroi arrière bordée d'une paroi latérale pourvue ici de quatre pans deux à deux opposés. Ce socle 11 loge intérieurement le moteur du mécanisme d'appareillage 10 (non représenté), c'est-à-dire ici les bornes de connexion de la prise de courant.

Le support d'appareillage 20 présente la forme d'un cadre 20A plat, ici de forme carrée. Il est réalisé d'une seule pièce, par exemple par moulage d'une matière plastique isolante du type ABS.

Le cadre 20A est défini entre un bord périphérique extérieur 28 et un bord périphérique intérieur qui délimite une ouverture centrale 21, ici de forme carrée avec des coins arrondis. L'ouverture centrale 21 loge le socle 11 du mécanisme d'appareillage 10.

De manière classique, le support d'appareillage 20 comporte quatre perçages (non visibles sur les figures), à raison d'un perçage situé sensiblement au milieu de chacune des quatre branches de son cadre 20A. Chacun de ces quatre perçages présente la forme d'un trou de serrure et est destiné à venir en regard d'un fût tubulaire ménagé dans la boîte de réception de l'appareillage électrique 1, pour permettre la fixation par vis du support d'appareillage 20 dans cette boîte.

Le bord périphérique extérieur 28 du cadre 20A est un bord tombant du côté de la face arrière 22 du support d'appareillage. Sa tranche est destinée à s'appliquer contre la paroi d'encastrement.

Le support d'appareillage 20 porte sur sa face arrière, le long du bord périphérique extérieur 28, un joint souple à double lèvres 29. Ce joint est surmoulé sur la face arrière du support d'appareillage 20 et est destiné à s'écraser contre la paroi d'encastrement pour réaliser une barrière d'étanchéité.

Le support d'appareillage 20 comporte par ailleurs, autour de son ouverture centrale 21, un rebord périphérique 25 tombant du côté de sa face arrière 22.

Du côté de sa face avant 23, le bord périphérique extérieur 28 du cadre 20A est longé par une lèvre d'étanchéité (non visible sur les figures) souple et surmoulée sur le support d'appareillage 20.

La plaque de finition 70 présente la forme d'un cadre. Elle est rapportée par encliquetage sur la face avant 23 du support d'appareillage 20.

Cette plaque de finition 70 s'étend dans le prolongement du bord périphérique extérieur 28 du cadre 20A.

La tranche arrière de la plaque de finition 70 présente une gorge périphérique (non visible) dans laquelle est logée la lèvre d'étanchéité prévue sur la face avant 23 du support d'appareillage 20.

Pour sa fixation sur le support d'appareillage 20, la plaque de finition 70 comporte des pattes d'encliquetage (non visibles) qui s'étendent en saillie vers l'arrière de l'appareillage électrique 1, qui sont insérées dans des ouvertures correspondantes 39 du support d'appareillage 20 et qui s'accrochent à la face arrière 22 de ce dernier.

L'enjoliveur 60 se présente sous la forme d'une plaque 61 de forme carrée, dont la périphérie porte un bord tombant 62 vers l'arrière de l'appareillage électrique 1.

La partie centrale de la plaque 61 présente en renfoncement un puits 63 d'insertion d'une fiche. Ce puits 63 est délimité par une paroi latérale cylindrique et une paroi de fond plane percée de deux ouvertures de passage des broches d'une fiche électrique (non représentée).

Un clapet 69 est monté à pivotement le long d'un bord de la face avant de la plaque 61 de l'enjoliveur 60, de manière à pouvoir être rabattu sur cette dernière lorsqu'aucune fiche électrique n'est insérée dans le puits 63. Ce clapet 69 recouvre l'ensemble de la face avant de la plaque 61 pour fermer l'accès au puits 63 en cas de non utilisation de la prise de courant. Il est rappelé en position rabattue sur la face avant de la plaque 61 par des moyens élastiques de rappel (non visibles sur les figures).

L'enjoliveur 60 est rapporté sur la face avant 23 du support d'appareillage 20, de telle sorte que son puits 63 est engagé au travers de ladite ouverture centrale 21, pour fermer l'ouverture avant du socle 11 du mécanisme d'appareillage 10 (qui est lui-même rapporté par l'arrière sur le support d'appareillage 20).

Pour le centrage de l'enjoliveur 60 par rapport au support d'appareillage 20, la face arrière de la plaque 61 de l'enjoliveur 60 est munie de languettes 66 qui s'étendent vers l'arrière de l'appareillage électrique 1, orthogonalement au plan de ladite plaque 61. Ces languettes 66 sont engagées au travers d'ouvertures 39 de formes complémentaires prévues dans les branches du cadre 20A.

Ici, les ouvertures d'accueil des languettes 66 de l'enjoliveur 60 et les ouvertures d'accueil des pattes d'encliquetage de la plaque de finition 70 communiquent entre elles. Bien sûr, en variante, il pourrait être prévu des ouvertures distinctes pour chaque languette et pour chaque patte d'encliquetage.

Le bord tombant 62 de l'enjoliveur 60 présente une face latérale externe qui s'applique contre la face latérale interne de la plaque de finition 70.

Pour la solidarisation rigide de l'enjoliveur 60 à la plaque de finition 70 encliquetée sur le cadre 20A du support d'appareillage 20, l'enjoliveur 60 porte à l'avant des moyens de verrouillage 68.

Plus particulièrement, ces moyens de verrouillage comportent quatre clefs quart-de-tour 68 disposées par paires sur deux côtés opposés de l'enjoliveur 60. Chaque clef comporte une tête de manoeuvre accessible en face avant de la plaque 61 de l'enjoliveur 60, et un panneton apte à être positionné en retrait ou en saillie de la face latérale externe de l'enjoliveur 60 selon la position angulaire de la clef. Le bord tombant 62 de l'enjoliveur 60 comporte alors, au niveau de chaque clef quart-de-tour 68, une fenêtre 67 au travers de laquelle le panneton correspondant peut faire saillie.

En correspondance, la plaque de finition 70 comporte des logements 71 qui sont réalisés en renfoncement de la face latérale interne de la plaque de finition 70 et qui sont destinés à accueillir les pannetons desdites clefs quart-de-tour 68.

L'enjoliveur 60, qui porte le puits 63, confère à l'appareillage électrique 1 sa fonction de prise de courant, tandis que le socle 11 renferme le moteur du mécanisme d'appareillage 10, ce qui permet à l'appareillage électrique 1 de remplir sa fonction.

En variante, la fonction de l'appareillage électrique peut être conférée par le mécanisme d'appareillage lui-même, en particulier si l'appareillage électrique est un interrupteur ou un va-et-vient. L'enjoliveur présente alors une simple forme de cadre qui définit une ouverture de forme quelconque (par exemple rectangulaire ou circulaire) et qui est rapporté sur la face avant du support d'appareillage. En revanche, l'ouverture avant du socle du mécanisme d'appareillage est fermée par une touche mobile qui est accessible à l'usager au travers de l'ouverture de l'enjoliveur. Les moyens de centrage et de fixation de l'enjoliveur sur le support d'appareillage et sur le socle du mécanisme d'appareillage sont alors identiques ou semblables à ceux présentés précédemment, à l'exception près que le socle est dépourvu de bras en forme de pince.

Selon le mode de réalisation représenté sur les figures, le socle 11 du mécanisme d'appareillage 20 est encliqueté par l'arrière sur le support d'appareillage 20.

Pour cela, la face latérale externe du socle 11 du mécanisme d'appareillage 10 porte quatre languettes 15 de formes triangulaires, qui s'étendent depuis les quatre arêtes de jonction des quatre pans de sa paroi latérale, vers l'extérieur de l'appareillage électrique 1, parallèlement au plan de son ouverture avant. Chaque languette 15 présente un bord rattaché au socle 11 et deux bords libres.

En correspondance, le support d'appareillage 20 comporte quatre pattes 26 situées aux quatre coins arrondis de l'ouverture centrale 21, qui s'étendent depuis la tranche libre 24 du bord périphérique 25 longeant le contour de ladite ouverture centrale 21, vers l'arrière de l'appareillage électrique 1, perpendiculairement à la face arrière 22 du support d'appareillage 20. La face intérieure de chaque patte 26 est munie d'une dent d'encliquetage.

Les dents d'encliquetage des pattes 26 du support d'appareillage 20 sont accrochées aux faces arrière des languettes 15 du socle 11, afin de retenir ce dernier sur le support d'appareillage 20

L'un des bords libres de chaque languette 15 est en outre en appui contre la face intérieure de la patte 26 correspondante du support d'appareillage 20, ce qui permet de bloquer latéralement le socle 11 dans l'ouverture centrale 21 du support d'appareillage 20.

Selon une caractéristique particulièrement avantageuse de l'invention, il est prévu, de part et d'autre de l'ouverture centrale 21 du support d'appareillage 20, au moins deux butées 41A distinctes rapportées sur la face arrière 22 du support d'appareillage 20, à distance de celle-ci. En correspondance, la face externe de la paroi latérale du socle 11 porte en saillie au moins deux ailettes 12, chaque ailette 12 comportant un bord libre arrière 13 adapté à venir en appui contre l'une desdites butées 41A.

Plus précisément, le socle 11 porte sur deux pans opposés de sa paroi latérale quatre ailettes 12 qui s'étendent à côté des quatre languettes 15, en hauteur, le long des arêtes de jonction de ses quatre pans.

Chaque ailette 12 présente une forme de rectangle avec un bord d'extrémité libre arrière 13 à proximité immédiate (au jeu près) de l'une des butées 41A, un bord d'extrémité libre avant 14, un bord longitudinal solidaire du socle 11 et un bord longitudinal libre qui s'étend entre les bords d'extrémité libres arrière et avant 13, 14.

Les bords d'extrémité libres avant et arrière 13, 14 des ailettes 12 s'étendent parallèlement à la face arrière 22 du support d'appareillage 20.

Les bords d'extrémité libres avant 14 des ailettes 12 sont en appui contre la tranche libre 24 du rebord périphérique 25 qui suit le contour de l'ouverture centrale 21 du support d'appareillage 20. De cette manière, les ailettes 12 sont prises en sandwich entre les butées 41A et le rebord périphérique 25, ce qui consolide la liaison par encliquetage du socle 11 dans le support d'appareillage 20, et empêche ainsi tout mouvement axial du socle 11 par rapport au support d'appareillage 20 de l'appareillage électrique 1.

Les butées 41A sont solidarisées à deux montants 40 qui sont situés le long de deux bords opposés de l'ouverture centrale 21 et qui s'étendent à partir de la face arrière 22 du support d'appareillage 20, sensiblement perpendiculairement à celle-ci.

Bien entendu, si, en variante, l'ouverture centrale du support d'appareillage présentait une forme circulaire, les montants seraient disposés de manière diamétralement opposée le long de deux tangentes parallèles de cette ouverture centrale.

Selon un mode préférentiel de l'invention, comme le montrent les figures 1 à 3, chaque montant 40 est rapporté par encliquetage sur le support d'appareillage 20 et chaque butée 41A vient de formation avec l'un des montants 40.

Plus particulièrement, chaque montant 40 se présente globalement sous la forme d'une plaque en T de faible épaisseur, positionnée tête en bas dans l'appareillage électrique 1. La tête du T présente deux côtés longitudinaux 45 parallèles portant chacun en saillie, du côté de leurs extrémités arrière, un élément de butée 41. Chaque élément de butée 41 forme un retour perpendiculaire sur la face intérieure du montant 40, tournée vers l'autre montant. Chaque élément de butée 41 présente une face d'extrémité avant 41A, tournée vers l'avant du support d'appareillage 20, qui est parallèle à la face arrière 22 de celui-ci. Cette face d'extrémité avant forme ladite butée 41A.

Les butées 41A s'étendent toutes au même niveau, c'est-à-dire dans un même plan parallèle à la face arrière 22 du support d'appareillage 20, et sont disposées en regard des bords d'extrémité libres arrière 13 correspondant des ailettes 12 du socle 11 du mécanisme d'appareillage 10 encliqueté sur le support d'appareillage 20 (voir figures 1 et 2).

Pour le montage des montants 40, le support d'appareillage 20 comporte deux panneaux 30 carrés qui s'étendent face à face, sur deux bords opposés de l'ouverture centrale 21, perpendiculairement à la face arrière 22 du support d'appareillage 20.

Comme le montre plus particulièrement la figure 3, ces panneaux 30 présentent une faible épaisseur, sensiblement égale à l'épaisseur du rebord périphérique 25. Ils présentent deux faces extérieures opposées, chacune creusées d'un logement 38 accueillant l'un des montants 40. Chaque logement 38 présente une forme complémentaire de celle du T du montant 40 correspondant. Ainsi, chaque montant 40 s'encastre dans le panneau 30 correspondant sans générer de surépaisseur, c'est-à-dire sans créer d'encombrement supplémentaire dans la boîte de réception de l'appareillage électrique 1. La largeur des panneaux 30 est telle que les éléments de butée 41 des montants 40 encastrés dans les panneaux 30 font saillie de part et d'autre desdits panneaux 30 (figure 2).

Avantageusement, chaque montant 40 comporte des moyens d'encliquetage 42 qui coopèrent avec des moyens d'encliquetage 31 complémentaires du support d'appareillage 20.

A cet effet, chaque montant 40 comporte deux dents 42 qui s'étendent au-dessus des butées 41A, vers l'intérieur de l'appareillage électrique 1, à partir de chacun des deux côtés longitudinaux 45 parallèles de la tête du montant 40.

En correspondance, les fonds des logements 38 des panneaux 30 sont percés d'ouvertures 31 de formes complémentaires, dans lesquelles sont engagées les dents 42 des montants 40 pour s'accrocher sur les faces intérieures 30A des panneaux 30.

Plus précisément, chaque dent 42 présente un corps parallélépipédique dont le bord libre longitudinal est longé d'une nervure d'accroche arrimée sur le bord longitudinal de l'ouverture 31 correspondante.

Chaque dent 42 de chaque montant 40, accrochée dans l'ouverture 31 correspondante du panneau 30 du support d'appareillage 20, s'étend en longueur perpendiculairement à la face arrière 22 du support, et présente des bords d'extrémité avant et arrière en appui contre les bords avant et arrière correspondants de chaque ouverture 31. De cette façon, chaque dent 42 est immobilisée en translation dans chaque ouverture 31 suivant la direction perpendiculaire au plan du support d'appareillage 20 et ne peut se déformer que selon une direction U parallèle au plan du support d'appareillage 20 (et non pas perpendiculairement au plan de celui-ci).

La coopération des bords d'extrémité des dents 42 et des bords des ouvertures 31 correspondantes forme des moyens de butée des montants 40 sur le support d'appareillage 20, selon une direction perpendiculaire à la face arrière 22 du support d'appareillage 20 et orientée vers l'arrière de l'appareillage électrique 1.

L'extrémité libre 43 du pied de chaque montant 40, monté dans chaque panneau 30, débouche du côté de la face avant 23 du support d'appareillage 20, via une ouverture 36 ménagée dans le fond du logement 38 du panneau 30.

La face intérieure de chaque montant 40 forme, du côté de son extrémité libre 43, un décrochement 44 tourné vers l'arrière de l'appareillage électrique 1. Ce décrochement 44 s'appuie contre le rebord 36A de l'ouverture 36 dans laquelle est engagée ladite extrémité libre 43 du pied du montant 40.

La coopération de chaque rebord 36A et de chaque décrochement 44 forme des moyens de butée des montants 40 sur le support d'appareillage 20, selon une direction perpendiculaire à la face arrière 22 du support d'appareillage 20 et orientée vers l'arrière de l'appareillage électrique 1.

De cette manière, lors d'un choc frontal sur l'appareillage électrique 1, les butées 41A qui soutiennent par l'arrière les ailettes 12 du socle 11 du mécanisme d'appareillage 10 ainsi que les moyens de butée précités évitent que le socle 11 ne se décroche du support d'appareillage 20.

Selon un autre mode de réalisation de l'invention non représenté sur les figures, chaque montant vient de formation avec le panneau correspondant du support d'appareillage (i.e. forme une pièce monobloc), et les butées sont rapportées par encliquetage sur ces panneaux.

Plus précisément, selon ce mode, les panneaux et les montants qui forment des pièces monobloc comportent des aménagements d'encliquetage pour des éléments de butée pourvus de dents d'encliquetage.

Quel que soit le mode de réalisation de l'invention, la solidarisation par encliquetage des butées 41A sur le support d'appareillage 20 permet, lors du montage de l'appareillage électrique 1, de commencer par engager le socle 10 dans l'ouverture centrale 21 du support d'appareillage 20, par l'arrière de ce dernier, puis d'ensuite rapporter les butées 41A afin d'assurer le maintien par l'arrière du socle 11 dans le support d'appareillage 20.

Préférentiellement, quel que soit le mode de réalisation de l'invention, chaque montant 40 est adapté à loger une vis de griffe 50 (figure 1).

A cet effet, la face extérieure de chaque montant 40 est creusée d'un sillon 47 (figure 3) qui s'étend sur les deux tiers de sa longueur, à partir de son extrémité avant. Ce sillon 47 présente, du côté de son extrémité avant, un élargissement de section dans lequel peut se loger la tête de la vis de griffe 50. De cette manière, la tête de la vis de griffe 50 est accessible par la face avant 23 du support d'appareillage 20, au travers de l'ouverture 36 ménagée dans le panneau 30.

A l'opposé de cet élargissement de section, le sillon 47 débouche sur un pan incliné 48 qui est réalisé en renfoncement de la face extérieure du montant 40 et qui est apte à accueillir la griffe de la vis de griffe 50. Ce pan est incliné vers l'arrière et l'extérieur de l'appareillage électrique 1.

De cette manière, lorsqu'un usager fait pivoter la vis de griffe 50, la griffe remonte le long du pan incliné 48 et, de ce fait, sort en saillie vers l'extérieur des montants 40. Cette griffe peut ainsi s'accrocher à la boîte de réception de l'appareillage électrique 1.

Ces vis de griffes forment des moyens d'accroche alternatifs de l'appareillage électrique 1 dans la boîte. Elles ne sont donc pas nécessairement livrées avec l'appareillage électrique 1.

## Revendications

1. Appareillage électrique (1) comprenant :
- un mécanisme d'appareillage (10) pourvu d'un socle (11),
- un support d'appareillage (20) sur lequel est rapporté le mécanisme d'appareillage (10) et qui présente une forme de cadre pourvu d'une ouverture centrale (21) logeant le socle (11) du mécanisme d'appareillage (10),
**caractérisé en ce qu'**il comporte, de part et d'autre de ladite ouverture centrale (21), au moins deux butées (41A) distinctes, rapportées sur la face arrière (22) du support d'appareillage (20), à distance de celle-ci, et **en ce que** ledit socle (11) présente une face externe latérale qui porte en saillie, en correspondance avec lesdites butées (41A), au moins deux ailettes (12), chaque ailette (12) comportant un bord libre arrière (13) adapté à venir en appui contre ladite butée (41A) correspondante.

2. Appareillage électrique (1) selon la revendication précédente, dans lequel le bord libre arrière (13) de chaque ailette (12) est en contact permanent avec la butée (41A) correspondante.

3. Appareillage électrique (1) selon la revendication 1, dans lequel le bord libre arrière de chaque ailette est placé à proximité immédiate de la butée correspondante, sans être en contact permanent avec celle-ci.

4. Appareillage électrique (1) selon la revendication précédente, comportant des moyens élastiques de rappel des ailettes du socle d'appareillage à distance des butées correspondantes.

5. Appareillage électrique (1) selon l'une des revendications précédentes, dans lequel il est prévu deux montants (40) placés de part et d'autre de ladite ouverture centrale (21), qui s'étendent à partir de la face arrière (22) du support d'appareillage (20), sensiblement perpendiculairement à celle-ci, les deux butées (41A) étant respectivement solidarisées aux deux montants (40).

6. Appareillage électrique (1) selon la revendication 5, dans lequel chaque montant (40) est rapporté sur le support d'appareillage (20) et chaque butée (41A) vient de formation avec un des montants (40).

7. Appareillage électrique (1) selon la revendication précédente, dans lequel chaque montant (40) comporte des moyens d'encliquetage (42) qui coopèrent avec des moyens d'encliquetage (31) complémentaires du support d'appareillage (20).

8. Appareillage électrique (1) selon la revendication précédente, dans lequel les moyens d'encliquetage (31, 42) des montants (40) et du support d'appareillage (20) forment des moyens de butée selon une direction perpendiculaire à la face arrière (22) du support d'appareillage (20) et orientée vers l'arrière de l'appareillage électrique (1).

9. Appareillage électrique (1) selon l'une des deux revendications précédentes, dans lequel chaque montant (40) comporte, de manière distincte de ses moyens d'encliquetage (42), d'autres moyens de butée (44) coopérant avec le support d'appareillage (20), selon une direction perpendiculaire à la face arrière (22) du support d'appareillage (20) et orientée vers l'arrière de l'appareillage électrique (1).

10. Appareillage électrique (1) selon l'une des revendications 5 à 9, dans lequel chaque montant (40) comporte en saillie de chacun de ses deux côtés longitudinaux (45) une desdites butées (41A), et dans lequel le socle (11) comporte, en correspondance, quatre ailettes (12).

11. Appareillage électrique (1) selon la revendication précédente, dans lequel les deux butées (41A) de chaque montant (40) sont situées sur un même niveau, à égale distance de la face arrière (22) du support d'appareillage (20).

12. Appareillage électrique (1) selon l'une des revendications 5 à 11, dans lequel chaque montant (40) loge une vis de griffe (50) dont la tête est accessible à l'utilisateur par la face avant (23) du support d'appareillage (20).

13. Appareillage électrique (1) selon l'une des revendications précédentes, dans lequel chaque ailette (12) du socle (11) comporte un bord libre avant (14) adapté à venir en appui contre un aménagement (24) de la face arrière (22) du support d'appareillage (20).

14. Appareillage électrique (1) selon la revendication précédente, dans lequel ledit aménagement (24) forme une partie d'un rebord périphérique (25) qui suit le contour de ladite ouverture centrale (21).

15. Appareillage électrique (1) selon l'une des revendications précédentes, dans lequel le socle (11) est rapporté dans ladite ouverture centrale (21) par l'arrière du support d'appareillage (20).
